**Europäisches Patentamt**

**European Patent Office**

**Office européen des brevets**

(19)

(11) Publication number : **0 493 334 A1**

(12) # EUROPEAN PATENT APPLICATION

(21) Application number : **91830555.8**

(22) Date of filing : **12.12.91**

(51) Int. Cl.⁵ : **B60S 1/48**

(30) Priority : **24.12.90 IT 4861390**

(43) Date of publication of application :
**01.07.92 Bulletin 92/27**

(84) Designated Contracting States :
**AT BE CH DE DK ES FR GB LI LU NL SE**

(71) Applicant : **Prezioso, Ruggero**
**20 Via Tomba di Nerone**
**I-00189 Roma RM (IT)**

(72) Inventor : **Prezioso, Ruggero**
**20 Via Tomba di Nerone**
**I-00189 Roma RM (IT)**

(74) Representative : **Di Cerbo, Mario et al**
**Società Italiana Brevetti S.p.A., Piazza di**
**Pietra 39**
**I-00186 Roma (IT)**

(54) Device for the de-frosting of the windshield of motor cars.

(57)    A device for motor cars, characterized in that it is suitable for de-frosting of the windshield and that it is formed essentially by the combination of the following parts :

a reservoir (2) with an opening provided with a reversible closure element ;

a first pipe (3) connecting the reservoir (2) to a heating unit (7) ;

heating unit (7) formed essentially by a hollow chamber, of a first nipple (4) for said first pipe ; of a resistor coated with an isolating material (5) ; of at least one electrode (8) for connection of the resistor to the battery of the motor car ; of a second nipple (9) for a second pipe (10) ; and, optionally, of a discharge valve ;

a second pipe (10) connecting the heating unit (7) to spray means in register with the windshield and directed towards it ; and

means for connecting said electrodes (8) to the battery of the motor car.

The invention also extends to the sole heating unit arranged so as to be inserted in the circuit for the distribution of soapy water usually present aboard motor cars.

EP 0 493 334 A1

The subject of the present invention is a device for the de-frosting of the windshield of motor cars.

As it is known, when the temperature drops below 0°C, the annoying phenomenon of the freezing of water or snow falling on the windshield of a motor car occurs. This problem has already been dealt with in the state of the prior art. The most widespread solution consists in using a scraper that, with a certain amount of effort, allows the windshield to be freed from the layer of ice which has formed thereon.

This solution, however, in its practical adoption encounters a series of inconveniences. Some of these inconveniences are mentioned only as an example: the use of the scraper is not appropriate for persons who do not have a sufficient physical strength; there is the danger of hurting oneself in the attempt to break and carry away the layer of ice; and the operation for restoration of conditions of visibility through the windshield must be necessarily performed from the exterior of the motor car.

The present invention makes it possible to overcome all the above mentioned inconveniences, moreover providing the advantages that will be clear in the following.

The device for motor cars according to the present invention is characterized by the fact that it is suited for defrosting the windshield and is made up essentially of the combination of the following parts:

– a trough with an opening provided with a reversible closure element;

– a first pipe connecting the trough to a heating unit;

– heating unit constituted essentially of a hollow chamber; of a first nipple for said first pipe; of a resistor coated with an isolating material; of at least one electrode for connection of the resistor to the battery of the motor car; of a second nipple for a second pipe; and, optionally, of a discharge valve;

– a second pipe connecting the heating unit to spray means in register with the windshield and directed towards it; and

– means for connecting said electrodes to the battery of the motor car.

The trough, the pipes and the heating unit may be made with the same material. This material may be selected from the group comprising substantially plastic materials either natural or synthetic, either organic or inorganic, and metallic materials. The aperture of the trough may be formed by a threaded neck, and in this case the closure element is formed by a threaded lid. The hollow chamber of the heating unit may be substantially in the shape of a parallelpipedon.

The means for connecting said electrodes to the battery may be located on the inside of the vehicle and consist preferably in a switch, for example a timer.

The present invention also extends to a heating unit, characterized in that it is made up of a hollow chamber; of a first nipple; of a resistor coated with insulating material; of at least one electrode for the connection of the resistor to the battery of the motor car; of a second nipple; and, optionally, of a discharge valve, and is characterized in that it can be inserted into the circuit for the distribution of soapy water normally found in motor cars.

Up to now a general description has been given of the present invention. There will now be provided, with the assistance of the single drawing attached, which refers to a particular embodiment thereof, further information on the purposes of the invention, about its features, on its advantages and on its operation. Said embodiment provides for the insertion of the heating unit into the pre- existing circuit for the distribution of soapy water.

The figure shows a perspective view of said embodiment of the device according to the invention, in longitudinal section in correspondence with the heating unit.

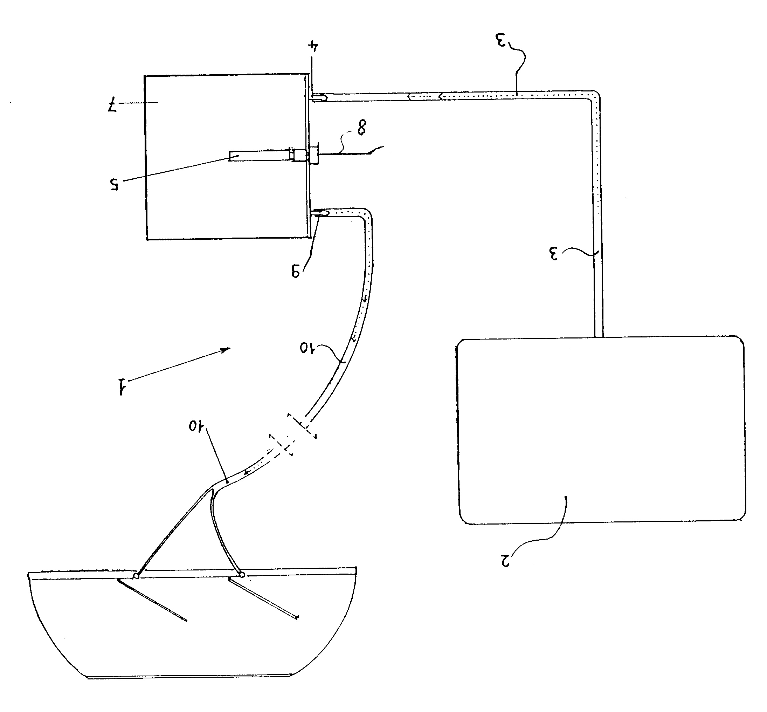

In figure 1, 1 shows as a whole the device according to the present invention, made in polyethylene, except for the heating unit, which is made of stainless steel. In 2 there is shown a trough carrying soapy water, whilst in 3 is shown a first pipe connecting the trough to the heating unit through the nipple 4. 5 is a resistor coated with an insulating material 6. From the heating unit shown with number 7, protrudes the electrode 8, shaped like a wire, that may be connected to the battery of the motor car, not shown in the figure. The nipple 9 is inserted in the portion of pipe 10 that connects the heating unit 7 to a number of spray holes in register with the windshield and not shown in the figure. The resistor 5 is connected to the battery by means of a switch, located on the inside of the vehicle, not shown in the figure. As can be seen from the figure, the nipple 4 must be located under the nipple 9, since in this embodiment of the invention no discharge valve for the heating unit is provided.

The operation of the embodiment shown in the figure, of the device according to the present invention, is the following. From the interior of the motor car, the switch for connection of the wire 8 to the battery is turned on. After about 20 seconds (necessary for heating the water contained in the heating unit 7 and if necessary for defrosting the water contained in the trough 2) the pump is activated for the spraying the water thus heated onto the windshield. The hot water, arriving in contact with the layer of ice present on the windshield, causes its immediate dissolution. Also in the hypothesis that the water in the trough be frozen, it has been determined that it is sufficient to wait a few seconds more in order to activate the device in a satisfactory way.

## Claims

1. A device for motor cars, characterized in that it is suited for the defrosting of the windshield and that it is formed essentially by the combination of the following parts:
   – a trough with an opening provided with a reversible closure element;
   – a first pipe connecting the trough to a heating unit;
   – heating unit formed by a hollow chamber; of a first nipple for said first pipe; of a resistor coated with an isolating material; of at least one electrode for connection of the resistor to the battery of the motor car; of a second nipple for a second pipe; and, optionally, of a discharge valve;
   – a second pipe connecting the heating unit to spray means in register with the windshield and directed towards it; and
   – means for connecting said electrodes to the battery of the motor car.

2. The device for motor cars according to claim 1, wherein the aperture is formed by a threaded neck, the closure element being formed by a threaded lid.

3. The device for motor cars according to claims 1 or 2, characterized in that the construction material is, independently for each constituting part, selected from the group comprising substantially plastic materials, either natural or synthetic, organic and inorganic, and metallic materials.

4. The device for motor cars according to any one of the preceding claims, wherein the trough, the pipes and the heating unit are made of the same material.

5. The device for motor cars according to any one of the preceding claims, wherein the means of connecting said electrodes to the battery are located inside the motor car.

6. The device for motor cars according to claim 5, wherein the means for connecting said electrodes to the battery consist in a switch.

7. A heating unit, characterized in that it is formed essentially of a hollow chamber, of a substantially tubular first nipple; of a resistor coated with insulating material; of at least one electrode for connection of the resistor to the battery of the motor car; and of a second nipple substantially tubular; and, optionally, of a discharge valve, and characterized in that it can be inserted in the circuit for the circulation of soapy water normally to be found in motor cars.

8. The heating unit according to the preceding claim, wherein the material with which the hollow chamber and the nipples are realized is selected from the group comprising plastic materials, either natural or synthetic, organic and inorganic, and metal materials.

EP 0 493 334 A1

European Patent
Office

**EUROPEAN SEARCH REPORT**

Application Number

EP    91 83 0555

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 555 841 (MOSER) | 1-3,7,8 | B60S1/48 |
| Y | * claims; figures * | 4-6 | |
| | * page 2, line 18 - page 5, line 13 * | | |
| | --- | | |
| X | DE-A-2 641 221 (BECKER) | 1,3,7,8 | |
| Y | * claims; figure * | 5,6 | |
| | * page 5, line 5 - page 6, line 18 * | | |
| | * page 7, line 11 - page 8, line 23 * | | |
| | --- | | |
| Y | DE-U-1 743 115 (HELMUT ERNST) | 4 | |
| A | * the whole document * | 1-3,8 | |
| | --- | | |
| X | FR-A-2 122 239 (CODELUPPI) | 1,3,7,8 | |
| | * claims 1-4; figure 1 * | | |
| | * page 1, line 23 - page 3, line 8 * | | |
| | * page 3, line 22 - line 35 * | | |
| | | | **TECHNICAL FIELDS SEARCHED (Int. Cl.5)** |
| | ----- | | |
| | | | B60S |

The present search report has been drawn up for all claims

| Place of search | Date of completion of the search | Examiner |
|---|---|---|
| THE HAGUE | 30 MARCH 1992 | WESTLAND P.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

5